# EUROPÄISCHE PATENTSCHRIFT

(11) **EP 1 074 814 B1**
(45) Veröffentlichungstag und Bekanntmachung des Hinweises auf die Patenterteilung: **20.05.2009**
(21) Anmeldenummer: 00114065.6
(22) Anmeldetag: 06.07.2000
(51) Int. Cl.: G01B 5/14, G01B 7/24

(54) **Vorrichtung zur Überprüfung des Achs- und Gelenkspiels an Kraftfahrzeugen**
Device for testing axle and joint play of vehicles
Dispositif pour tester les jeux des axes et articulations des véhicules

(30) Priorität: 04.08.1999 DE 29913566 U
(43) Veröffentlichungstag der Anmeldung: 07.02.2001
(73) Patentinhaber: MAHA Maschinenbau Haldenwang GmbH & Co. KG, 87490 Haldenwang (DE)
(72) Erfinder: Wanner, Hubert, 87490 Haldenwang (DE)
(74) Vertreter: MERH-IP Matias Erny Reichl Hoffmann

(56) Entgegenhaltungen:
- WO-A-98/10263
- DE-A- 2 819 394
- DE-U- 7 827 646
- US-A- 3 823 485
- PATENT ABSTRACTS OF JAPAN vol. 018, no. 078 (P-1689), 8. Februar 1994 (1994-02-08) & JP 05 288630 A (NISSAN ALTIA CO LTD), 2. November 1993 (1993-11-02)
- PATENT ABSTRACTS OF JAPAN vol. 011, no. 156 (P-578), 21. Mai 1987 (1987-05-21) & JP 61 292035 A (NISSAN JIDOSHA HANBAI KK;OTHERS: 04), 22. Dezember 1986 (1986-12-22)

## Beschreibung

Die Erfindung betrifft eine Vorrichtung zur Überprüfung des Achs- und Gelenkspiels an Kraftfahrzeugen mit zwei zur Bildung einer prismatische Reifenauflage angeordneten Auflageelementen, von denen mindestens eines quer zur Kraftfahrzeuglängsachse verschiebbar ist.

Es sind bereits Vorrichtungen zur Überprüfung von Gelenk- bzw. Lagerspielen an Kraftfahrzeugen bekannt, bei denen das eine Vorderrad auf einer quer zur Fahrzeuglängsachse beweglichen ebenen Platte und das andere Vorderrad auf einer prismatischen Reifenauflage steht. Durch eine Hin- und Herbewegung der ebenen Platte können Spiele in den Radlagern geprüft werden. Die prismatische Reifenauflage besteht bei den bekannten Vorrichtungen aus zwei getrennten Auflageplatten, von denen eine ortsfest mit der Unterlage verbunden und die andere quer zur Fahrzeuglängsachse verschiebbar ist. Durch eine Relativverschiebung der quer beweglichen Auflageplatte gegenüber der ortsfesten Auflageplatte wird ein Lenkeinschlag der beiden Vorderräder erreicht, wodurch eine Überprüfung der Lagerspiele in den Spurköpfen und der Radaufhängung ermöglicht wird. Durch die prismatisch angeordneten Auflageplatten wirken hohe Radialkräfte und damit große Reibungskräfte auf das Rad, wodurch ein großer Lenkeinschlag erreichbar ist. Dies stellt einen wesentlichen Vorteil gegenüber den um einen Mittelpunkt drehbaren Prüfplatten dar, mit denen nur ein kleinerer Lenkeinschlag erreicht wird. Die Anordnung eines Vorderrads in der prismatischen Radauflage hat allerdings zur Folge, daß dieses Rad eine im Vergleich zu den anderen Fahrzeugrädern unter schiedliche Höhe aufweist, so daß das Fahrzeug nicht waagrecht steht. Im Rahmen der üblichen Sicherheitsüberprüfung an Kraftfahrzeugen wird neben der Prüfung der Achs- und Gelenkspiele in der Regel auch eine Überprüfung bzw. Einstellung der Scheinwerfer vorgenommen. Besonders die modernen Scheinwerfer setzen für eine korrekte Scheinwerferüberprüfung jedoch eine waagrechte Stellung des Fahrzeugs voraus. Daher müssen die Fahrzeuge bei den herkömmlichen Prüfvorrichtungen mit prismatischer Reifenauflage zur Einstellung der Scheinwerfer zunächst so verfahren werden, daß das Vorderrad außerhalb der prismatischen Radauflage steht.

DE 28 193 94 A1 zeigt einen Bewegungssimulator für die Lenkungs- und Vorderachsenspiel-Kontrolle an Kraftfahrzeugen, bestehend aus jeweils einer jedes Vorderrad aufnehmenden Aufnahmeplatte, welche in horizontaler Ebene verschiebbar gelagert ist und an welcher zumindest ein ortsfest gelagerter, pneumatischer Verschiebeantrieb angreift, bei der mittels der pneumatischen Verschiebeantriebe verschiebbaren Platten als die Reifen der Vorderräder zumindest über einen Umfangsabschnitt umgreifende Aufnahmemulden ausgebildet und die pneumatischen Verschiebeantriebe mit einer federbelasteten oder pneumatische gesteuerten Rückstellvorrichtung in die Ausgangslage versehen sind. Die Aufnahmemulde ist unmittelbar auf dem Fahrweg einer Inspektionsgrube oder einer Hebebühne, die vorzugsweise aus einer Stahlplatte besteht, verschiebbar gelagert.

JP 61 292035 A zeigt eine Prüfvorrichtung zur Vibration eines Vorderrads von einem Fahrzeug, das das Spiel, den Ausschlag etc. einer effizienten und genauen Prüfung unterzieht, wobei durch das Ausbilden einer Reifenaufnahme, die sich mit Hilfe eines Bedienelements eines Antriebszylinders nach rechts und links bewegt und die Fläche der Reifenaufnahme, die der Reifenaufnahme folgt, ausgebildet wird, so dass sich zwei Ziehoperationen kreuzen, die an den Vorderrädern wirken. Hierzu wird ein Vorderrad eines Fahrzeugs auf beide Flächen der Reifenaufnahme der vorderen und hinteren Reifenaufnahme gestellt. In diesem Fall werden Ziehkräfte oder Lasten der vorderen oder hinteren Reifenaufnahme, die an dem Vorderrad wirken, derart angebracht, dass sie sich nahezu im Zentrum des Achsenschenkelbolzens kreuzen. Dann wird der Antriebszylinder derart betätigt, dass das Bedienelement nach rechts und links übersteht, und dann gleitet die hintere Reifenaufnahme in dieselbe Richtung und die vordere Reifenaufnahme folgt dieser ebenso. Zu diesem Zeitpunkt betätigt eine Ziehkraft jeden Verbindungsmechanismus, wie den Achsenschenkelbolzen, sobald sich das Rad in einem Winkel O befindet und zwei Kräfte in Richtung des Sturzes (aufwärts) und in Vorspurrichtung (nach vorne verengend) zum gleichen Zeitpunkt wirken.

DE 78 27 646 U zeigt eine Vorrichtung zur Ermittlung einer relativen Beweglichkeit zwischen Teilen des Fahrwerks oder der Lenkung bei einem Fahrzeug, insbesondere zur Ermittlung des Spiels zwischen Teilen der Radaufhängung und der Lenkung bei einem Kraftwagen, unter Verwendung mindestens einer Aufstandsplatte, die durch mindestens einen Antrieb quer zur Fahrzeuglängsachse beweglich angeordnet sind, wobei die Vorrichtung nur eine Aufstandsplatte aufweist, auf die das Rad des Fahrzeugs auffahrbar ist.

Die Aufgabe der Erfindung besteht darin, eine Vorrichtung zur Überprüfung des Achs- und Gelenkspiels der eingangs genannten Art zu schaffen, die auch ohne Verfahren des Kraftfahrzeugs dessen waagrechte Stellung ermöglicht.

Diese Aufgabe wird erfindungsgemäß wie in Anspruch 1 vorgeschlagen gelöst.

Bei der erfindungsgemäßen Vorrichtung kann eine waagrechte Stellung des Kraftfahrzeuges dadurch erreicht werden; daß eines der Auflageelemente derart nach unten verschwenkt wird, daß dessen Auflagefläche eine horizontale Auflagefläche bildet, deren Höhe mit der Höhe der anderen Reifenauflagepunkte übereinstimmt. Dadurch kann das in der prismatischen Reifenauflage angeordnete Rad auf das Niveau der anderen Räder gebracht werden, ohne daß das Fahrzeug hierzu verfahren werden muß. Eine Überprüfung der Scheinwerfer kann somit auch ohne vorheriges Verfahren des Fahrzeuges aus der prismatischen Reifenauflage durchgeführt werden, wodurch ein schnellerer Arbeitsablauf ermöglicht wird. Eine Absenkung des in der prismatischen Reifenauflage angeordneten Vorderrades kann auch dadurch erreicht werden, daß der Abstand zwischen den Auflageelementen durch Verschiebung eines der Auflageelemente in Richtung der Fahrzeuglängsachse erhöht wird.

Zweckmäßige Ausführungsformen der Erfindung sind in den abhängigen Ansprüchen angegeben.

In einer besonders vorteilhaften Ausführung ist z.B. das hintere Auflageelement quer zur Kraftfahrzeuglängsachse verschiebbar und das vordere Auflageelement verschwenkbar ausgeführt.

Das verschwenkbare Auflageelement kann in einer konstruktiv einfachen Ausführung eine einseitig angelenkte Auflageplatte sein, deren Winkelstellung über eine Hubeinrichtung veränderbar ist. Das Auflageelement kann so zwischen einer unteren Stellung mit horizontal angeordneter Auflagefläche und einer oberen Stellung verschwenkt werden, in der seine Auflagefläche geneigt ist und mit der Auflagefläche des anderen Auflageelements die prismatische Reifenauflage bildet.

Die Hubeinrichtung kann in einer besonders einfach zu steuernden Ausführung eine hydraulisch oder pneumatisch betätigte Zylinder-Kolben-Einheit sein, deren Kolben durch Druckbeaufschlagung ausgefahren und beim Druckabbau durch das Gewicht des Kraftfahrzeugs nach unten gedrückt wird.

Die erfindungsgemäße Vorrichtung kann z.B. in eine Hebebühne integriert oder in den Boden einer Werkstatt eingebaut sein.

Weitere Besonderheiten und Vorzüge der Erfindung ergeben sich aus der folgenden Beschreibung eines bevorzugten Ausführungsbeispiels anhand der Zeichnung. Es zeigt:
- Fig. 1: eine Schnittansicht einer erfindungsgemäßen Prüfvorrichtung mit angehobenem vorderen Auflageelement;
- Fig. 2: eine Schnittansicht der in Fig. 1 dargestellten Prüfvorrichtung mit abgesenktem vorderen Auflageelement; und
- Fig. 3: eine Draufsicht auf die erfindungsgemäße Prüfvorrichtung ohne vorderem und hinterem Auflageelement.

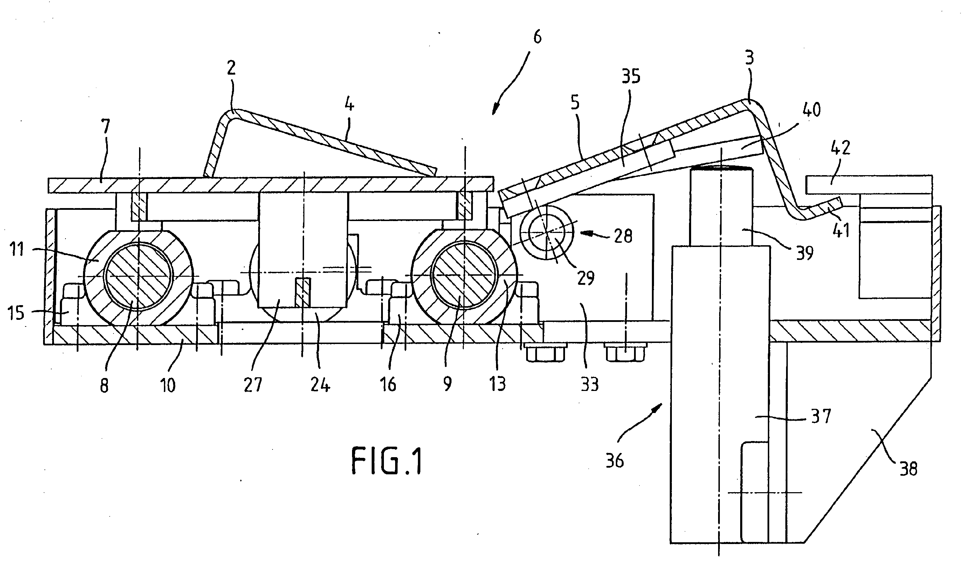

Die in den Fig. 1 bis 3 schematisch dargestellte Vorrichtung 1 zur Überprüfung des Achs- und Gelenkspiels an Kraftfahrzeugen enthält zwei voneinander getrennte Auflageelemente 2 und 3 in Form von abgewinkelten Auflageplatten, die z.B. aus rechtwinklig gebogenen Blechplatten hergestellt sind. Die beiden Auflageelemente 2 und 3 bilden mit ihren oberen Auflageflächen 4 bzw. 5 in der in Fig. 1 dargestellten Stellung eine prismatische Reifenauflage 6, in der z.B. der linke Vorderreifen eines Kraftfahrzeugs derart angeordnet wird, daß er mit seiner Lauffläche auf beiden Auflageflächen 4 und 5 aufliegt.

Das in Fig. 1 linke Auflageelement 2 ist auf einer senkrecht zur Zeichenebene verschiebbaren Trägerplatte 7 befestigt, die über zwei parallele Führungsstangen 8 und 9 auf einer Bodenplatte 10 geführt ist.

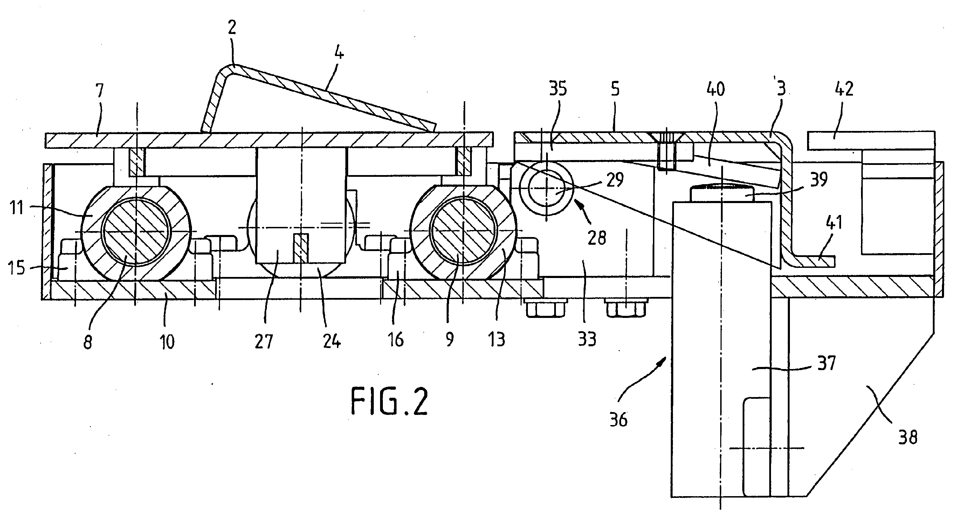

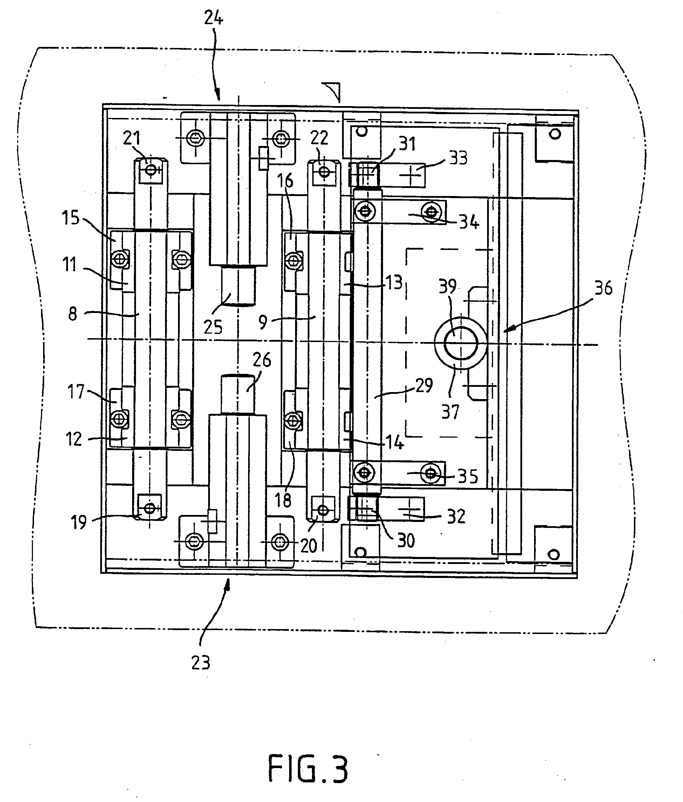

Wie besonders aus Fig. 3 hervorgeht, ist jede der Führungsstangen 8 und 9 in jeweils zwei voneinander beabstandeten Lagerbuchsen 11 und 12 bzw. 13 und 14 gleitend angeordnet. Die Lagerbuchsen 11 bis 14 sind bei der gezeigten Ausführung über jeweils einen unteren Befestigungsflansch 15, 16, 17 und 18 auf der Bodenplatte 10 festgeschraubt. Die Führungsstangen 8 und 9 haben an der Oberseite ihrer beiden von den Lagerbuchsen 11 bis 14 seitlich vorstehenden Enden flache Auflageflächen 19 bis 22, auf denen die Trägerplatte 7 befestigt ist. Zwischen den Führungsstangen 8 und 9 sind an der Bodenplatte 10 zwei z.B. hydraulisch betätigte, koaxiale Zylinder-Kolben-Einheiten 23 und 24 mit einander beabstandet gegenüberliegenden Kolben 25, 26 befestigt. Die beiden Zylinder-Kolben-Einheiten 23 und 24 sind derart angeordnet, daß die beiden Kolben 25 und 26 zur Anlage an den gegenüberliegenden Seitenflächen eines in den Fig. 1 und 2 dargestellten Ansatzes 27 gelangen, der an der Unterseite der Trägerplatte 7 zentral angeordnet ist. Durch wechselseitige Ansteuerung der beiden Zylinder-Kolben-Einheiten 23 und 24 kann so die Trägerplatte 7 mit dem Auflageelement 2 quer zur Kraftfahrzeuglängsachse hin- und herbewegt werden.

Das in Fig. 1 rechts dargestellte vordere Auflageelement 3 ist eine nach oben und unten verschwenkbare Auflageplatte, die über ein Drehgelenk 28 an ihrem in Fig. 1 linken Ende verschwenkbar auf der Bodenplatte 10 angelenkt ist. Das Drehgelenk 28 besteht aus einer quer zur Fahrzeuglängsachse angeordneten Stange 29, deren Enden 30 und 31 in zwei auf der Bodenplatte 10 befestigten Lagerstützen 32 und 33 drehbar gelagert sind. Auf der Oberseite der Stange 29 sind zwei seitlich auskragende Träger 34 und 35 befestigt, auf denen das Auflageelement 3 festgeschraubt ist. Die Anhebung des Auflageelements 3 erfolgt durch eine Hubeinrichtung 36 in Form einer vertikal angeordneten, pneumatisch oder hydraulisch betätigten Zylinder-Kolben-Einheit, deren Zylinder 37 an einer an der Unterseite der Bodenplatte 10 angeordneten Winkelstütze 38 befestigt ist. Der Kolben 39 der Zylinder-Kolben-Einheit 36 liegt an einer Stützplatte 40 an der Unterseite des Auflageelements 3 an. Das Auflageelement 3 weist an seiner Vorderseite einen abgewinkelten Bereich 41 auf, der eine feststehende vordere Platte 42 untergreift. Dadurch kann ein zu weites Verschwenken des Auflageelements 3 nach oben verhindert werden.

Durch Druckbeaufschlagung der Zylinder-Kolben-Einheit 36 kann das vordere Auflageelement 3 aus einer in Fig. 2 dargestellten unteren Stellung mit horizontal angeordneter Auflagefläche 5 in eine in Fig. 1 gezeigte obere Stellung verschwenkt werden, in der die Auflagefläche 5 des vorderen Auflageelements 3 mit der Auflagefläche 4 des hinteren Auflageelements 2 die prismatische Reifenauflage 6 bildet. Wenn der Druck in der Zylinder-Kolben-Einheit z.B. durch Öffnen eines entsprechenden Ventils abgebaut wird, drückt das Fahrzeuggewicht den Kolben 39 und damit auch das Auflageelement 3 in die untere Stellung von Fig. 2 zurück. Dadurch kann der Reifen zur Auflage auf der horizontal angeordneten Auflagefläche 5 gelangen, deren Höhe mit den anderen Reifenaufstandspunkten übereinstimmt.

Mit der erfindungsgemäßen Vorrichtung kann in der Stellung gemäß Fig. 1 eine Überprüfung der Achs- und Gelenkspiele vorgenommen werden, indem das hintere Auflageelement 4 quer zur Kraftfahrzeuglängsachse verschoben und dadurch ein Lenkeinschlag erreicht wird. Nach erfolgter Überprüfung der Achs- und Gelenkspiele kann das vordere Auflageelement 3 in eine untere Stellung gemäß Fig. 2 abgesenkt werden, so daß das Fahrzeug in eine waagrechte Lage gelangt. Dadurch kann z.B. eine anschließende Überprüfung der Scheinwerfer auch ohne Verfahren des Fahrzeugs durchgeführt werden.

Die Vorrichtung 1 kann in eine Hebebühne integriert oder auch in den Boden z.B. einer Werkstatt eingebaut sein.

Die Erfindung ist nicht auf die vorstehend beschriebene und in der Zeichnung dargestellte Ausführung beschränkt. So können z.B. anstelle der hydraulisch oder pneumatisch betätigten Zylinder-Kolben-Einheiten auch andere Stellantriebe zum Verschieben bzw. Verschwenken der Auflageelemente verwendet werden.

## Patentansprüche

1. Vorrichtung zur Überprüfung des Achs- und Gelenkspiels eines Kraftfahrzeugs, die zwei Auflageelemente (2, 3) zur Bildung einer prismatischen Reifenauflage (6) enthält, wobei mindestens ein Auflageelement (2, 3) quer zur Fahrzeuglängsachse verschiebbar ist, **dadurch gekennzeichnet, dass**
- die zwei Auflageelemente (2, 3) für die prismatische Reifenauflage (6) zwei voneinander getrennte, abgewinkelte Auflageplatten (2, 3) sind, die in Fahrzeug-Längsrichtung hintereinander angeordnet sind,
- die eine Auflageplatte (2) an zwei parallelen Führungsstangen (8, 9) auf einer Bodenplatte (10) in Fahrzeug-Querrichtung mittels einer Antriebseinheit (23, 24) verschiebbar ist und eine schräge Auflagefläche (4) aufweist, und
- die zweite Auflageplatte (3) mittels einer Hubeinrichtung (36) um eine quer zur Kraftfahrzeuglängsachse angeordnete Stange (29) aus einer unteren Stellung mit horizontaler Auflagefläche (5) in eine angehobene Stellung mit geneigter Auflagefläche (5) vertikal verschwenkbar ist.

2. Vorrichtung nach Anspruch 1, **dadurch gekennzeichnet, dass** die Hubeinrichtung (36) eine hydraulisch oder pneumatisch betätigte Zylinder-Kolben-Einheit (23, 24) ist.

3. Vorrichtung nach Anspruch 1 oder 2, **dadurch gekennzeichnet, dass** die verschwenkbare Auflageplatte (3) über ein Drehgelenk (28) auf der Bodenplatte (10) befestigt ist.

4. Vorrichtung nach Anspruch 3, **dadurch gekennzeichnet, dass** das Drehgelenk (28) eine quer zur Kraftfahrzeuglängsachse angeordnete Stange (29) enthält, deren Enden (30, 31) in zwei auf der Bodenplatte (10) befestigten Lagerstützen (32, 33) drehbar gelagert sind.

5. Vorrichtung nach einem der vorstehenden Ansprüche, **dadurch gekennzeichnet, dass** die Auflageplatte (2) mit einer querverschiebbaren Trägerplatte (7) verbunden ist, die an ihrer Unterseite einen Ansatz (27) aufweist, an dessen Außenseiten je eine ZylinderKolben-Einheit (23, 24) zum Erhalt der Hin- und Her-Bewegungen der Trägerplatte (7) angreift.

6. Vorrichtung nach einem der vorstehenden Ansprüche, **dadurch gekennzeichnet, dass** die Auflageplatten (2, 3) in einer Hebebühne angeordnet sind.

7. Vorrichtung nach einem der vorstehenden Ansprüche, **dadurch gekennzeichnet, dass** die zweite Auflageplatte (3) an einem Längs-ende einen abgewinkelten Bereich (41) aufweist, der eine feststehende Platte (42) untergreift.

## Claims

1. A device for testing the axle and joint play of a vehicle, containing two supporting members (2, 3) for forming a prismatic tire support (6), wherein at least one supporting member (2, 3) is transversely moveable relative to the longitudinal axis of the vehicle, **characterized in that**
- the two supporting members (2, 3) for the prismatic tire support (6) are two angled supporting plates (2, 3) separated from each another and arranged one after the other in the longitudinal direction of the vehicle,
- the one supporting plate (2) can be moved at two parallel guide rods (8, 9) on a bottom plate (10) in the transverse direction of the vehicle by means of a drive unit (23, 24) and has an inclined supporting surface (4), and
- the second supporting plate (3) can be vertically pivoted by means of a lifting unit (36) about a rod (29) disposed transversely to the longitudinal axis of the motor vehicle from a lower position with a horizontal supporting surface (5) into a lifted position with an inclined supporting surface (5).

2. The device according to claim 1, **characterized in that** the lifting unit (36) is a hydraulically or pneumatically operated cylinder-piston unit (23, 24).

3. The device according to claim 1 or 2, **characterized in that** the pivoting supporting plate (3) is fixed to the bottom plate (10) via a pivot (28).

4. The device according to claim 3, **characterized in that** the pivot (28) contains a rod (29) disposed transversely to the longitudinal axis of the motor vehicle, the ends (30, 3 1) of which are rotatably held in two pedestals (32, 33) fixed to the bottom plate (10).

5. The device according to any one of the preceding claims, **characterized in that** the supporting plate (2) is connected with a transversely movable carrier plate (7) which on its bottom lower side has an extension (27), a respective cylinder-piston unit (23, 24) engaging the outer sides thereof for maintaining the reciprocating movements of the carrier plate (7).

6. The device according to any one of the preceding claims, **characterized in that** the supporting plates (2, 3) are arranged in a lifting platform.

7. The device according to any one of the preceding claims, **characterized in that** the second supporting plate (3) has an angled portion (41) at a longitudinal end thereof which reaches under a fixed plate (42).

## Revendications

1. Dispositif pour tester le jeux des axes et articulations des véhicules, comprenant deux éléments d'appui (2, 3) pour former un support prismatique pour pneus (6), dans lequel au moins un élément d'appui (2, 3) est coulissant transversalement par rapport à l'axe longitudinal du véhicule, **caractérisé en ce que**
- les deux éléments d'appui (2, 3) pour le support prismatique pour pneus (6) sont deux plaques d'appui coudées (2, 3), séparées l'une de l'autre, qui sont disposées l'une derrière l'autre dans le sens longitudinal du véhicule,
- l'une (2) des plaques d'appui est coulissante le long de deux tringles de guidage parallèles (8, 9) sur une plaque de fond (10) dans le sens transversal du véhicule au moyen d'un module d'entraînement (23, 24) et présente une surface d'appui oblique (4), et
- la deuxième plaque d'appui (3) peut être orientée verticalement au moyen d'un système d'élévation (36) autour d'une tringle (29) disposée transversalement par rapport à l'axe longitudinal du véhicule depuis une position inférieure, où la surface d'appui (5) est à l'horizontale, en une position élevée, où la surface d'appui (5) est inclinée.

2. Dispositif selon la revendication 1, **caractérisé en ce que** le système d'élévation (36) est un module cylindre - piston (23, 24) à commande hydraulique ou pneumatique.

3. Dispositif selon la revendication 1 ou 2, **caractérisé en ce que** la plaque d'appui orientable (3) est fixée par le biais d'une articulation rotative (28) sur la plaque de fond (10).

4. Dispositif selon la revendication 3, **caractérisé en ce que** l'articulation rotative (28) comprend une tringle (29) disposée transversalement par rapport à l'axe longitudinal du véhicule, dont les extrémités (30, 31) sont rotatives dans deux supports de palier (32, 33) fixés sur la plaque de fond (10).

5. Dispositif selon l'une des revendications précédentes, **caractérisé en ce que** la plaque d'appui (2) est liée à une plaque support (7) coulissant transversalement, qui présente, sur sa face inférieure, une avancée (27), sur les faces externes de laquelle vient en prise un module cylindre - piston (23, 24) pour l'obtention des mouvements d'aller et venue de la plaque support (7).

6. Dispositif selon l'une des revendications précédentes, **caractérisé en ce que** les plaques d'appui (2, 3) sont disposées dans un pont élévateur.

7. Dispositif selon l'une des revendications précédentes, **caractérisé en ce que** la deuxième plaque d'appui (3) présente à une extrémité longitudinale une section coudée (41) qui rentre sous une plaque fixe (42).
